# FASCICULE DE BREVET EUROPEEN

(11) **EP 2 989 587 B1**
(45) Date de publication et mention de la délivrance du brevet: **04.09.2019**
(21) Numéro de dépôt: 14717458.5
(22) Date de dépôt: 12.03.2014
(51) Int. Cl.: G06K 7/00, G06Q 50/16, G06K 19/06, G06Q 30/06

(54) **TITRE IMMOBILIER ET MOBILIER DE PROPRIETE (TIMMOP) ELECTRONIQUE SECURISE DE NOUVELLE GENERATION**
SICHERE ELEKTRONISCHE IMMOBILIE DER NÄCHSTEN GENERATION UND PERSÖNLICHER EIGENTUMSTITEL (TIMMOP)
NEXT-GENERATION SECURE ELECTRONIC REAL ESTATE AND PERSONAL PROPERTY TITLE (TIMMOP)

(30) Priorité: 12.03.2013 FR 1300545
(43) Date de publication de la demande: 02.03.2016
(73) Titulaire: TOKPO, Alain Cyrill Edgar, 95560 Baillet-en-France (FR)
(72) Inventeur: TOKPO, Alain Cyrill Edgar, 95560 Baillet-en-France (FR)
(86) Numéro de dépôt international: PCT/FR2014/000054
(87) Numéro de publication internationale: WO 2014/140436

(56) Documents cités:
- FR-A1- 2 929 032
- KR-A- 20080 068 631
- GROUPE SEPHIRA: "Solution de télétransmission Mode d'emploi", RITECH, vol. 12, 31 janvier 2010 (2010-01-31), page 15, XP055090677,
- "TechTip: Des puces pour l'enregistrement des droits fonciers?", ICT Update, numéro 28, Octobre 2005, 10 octobre 2005 (2005-10-10), page 7, XP055119637, Extrait de l'Internet: URL:http://ictupdate.cta.int/fr/content/do wnload/560/29293/file/28_FR.pdf [extrait le 2014-05-22]

## Description

### DOMAINE TECHNIQUE DE L'INVENTION

L'objet de la présente invention se rapporte au domaine du droit de la propriété immobilière et mobilière, plus particulièrement, l'objet de l'invention concerne la création d'un titre de propriété nouvelle génération, sa gestion, sa sécurisation ainsi que le transfert rapide des transactions.

### ETAT DE LA TECHNIQUE DE L'INVENTION

S'agissant des biens immobiliers : il existe dans certains pays par exemple la France, des titres de propriété délivrés par les notaires qui les enregistrent et les publient. Ces titres de propriété sont définitifs et inattaquables, sauf en cas d'inscription de faux. Ces titres sont des actes authentiques sur support papier reçus enregistrés et publiés par les Notaires qui garantissent aux propriétaires une détention permanente, paisible et durable. Ces actes sont en papier, souvent volumineux ; se posent donc les problèmes de place, de protection contre toutes dégradations, de conservation, de transport, coût, et de consultation, et c'est pour répondre à toutes ces préoccupations qu'a été inventé le TITRE DE PROPRIETE (TIMMOP).

Les différents modes pour devenir propriétaire d'un bien mobilier ou immobilier sont : achat, donation, succession, prescription, échange ou autres. Ces différents modes de transfert de propriété se réalisent au travers d'un acte reçu en minute (original) par un notaire territorialement compétent sur un support papier plus ou moins volumineux. Cette formalité de rédaction, d'enregistrement et de publication est longue (2 à 3 mois dans certains pays et plus dans d'autres) et coûteuse. Le Notaire, lors du transfert du droit de propriété, s'assure de l'identification précise du bien, de sa localisation, et donc de son existence physique, et de l'identité du présumé propriétaire, de son droit de disposition, et de l'identité du bénéficiaire du transfert ou de l'acquéreur. Ces contrôles et vérifications ne sont possibles que grâce à l'existence d'un cadastre sécurisé. Le Cadastre est l'ensemble des documents sur lesquels sont enregistrés le découpage d'un territoire en propriétés et en cultures ainsi que le nom des propriétaires des différentes parcelles. En France c'est aussi le nom de l'Administration qui a la charge d'établir et de conserver ces documents.

Le plan cadastral a pour mission de renseigner et de repérer les parcelles en tant qu'unités de la propriété immobilière en les délimitant graphiquement par rapport aux parcelles voisines, en renseignant la présence éventuelle de bâtiments et en les identifiant à l'aide d'un nom de section (exemple section AB) du numéro parcellaire (100) Donc une parcelle peut-être cadastrée section AB numéro 100. Le plan cadastral est subdivisé en plusieurs entités administratives au sein de laquelle (desquelles) l'identifiant parcellaire est unique. Par exemple, en France, une parcelle est clairement identifiée par le nom de la commune à laquelle elle appartient, par le nom de la section, ensuite par son numéro principal et éventuellement son numéro secondaire. Un identifiant parcellaire est unique pour chaque section.

Jusqu'à présent, dans les pays développés et en particulier en France,, la propriété immobilière est protégée par un cadastre sécurisé et par la protection du transfert du droit de propriété qui se fait par acte authentique en général un acte notarié, soumis à une formalité fusionnée de l'enregistrement et de la publication. Cette formalité une fois réalisée, entraîne automatiquement, l'inscription et la publication du transfert du droit de propriété, au niveau local et national, comme expliqué ci-dessus. Dans la plupart des pays sous développés, ces protections ne sont pas assurées systématiquement ou n'existent pas du tout et un bien immobilier transféré par acte sous seings privés peut ne jamais être signalé à la mairie donc au niveau local ni au niveau national d'où l'insécurité foncière qu'il s'agit de corriger à l'aide du TITRE DE PROPRIETE (TIMMOP).

En effet, en l'absence d'un cadastre ou d'un système fiable et sécurisé d'identification des parcelles, il en découle, quotidiennement, de nombreux litiges, et donc, une insécurité foncière toujours croissante due au mode de transfert du droit de propriété par des actes sous seings privés. Les reventes successives du même bien à différents acquéreurs sont fréquentes. Du fait de l'absence de cadastre, et donc d'identification des biens immobiliers, l'absence de titre de propriété sécurisé est un frein au développement de ces pays.

Par ailleurs, le délai de transfert du droit de propriété est trop long et trop complexe. Un acquéreur, parfois, doit attendre des mois, voire des années pour obtenir son titre foncier de propriété, entre temps, rien ne lui garantit que le terrain ou le bien immobilier qu'il a acquis à titre onéreux, par donation, échange, par voie successorale ou autres n'a pas été revendu une deuxième ou une troisième fois ou tout simplement, revendiqué par une tiers personne.. Il peut en effet arriver qu'un terrain vendu (selon le droit coutumier, toujours en vigueur dans certains pays), soit grevé de droits au profit des tiers. Pendant cette période, l'acquéreur n'est donc pas à l'abri d'une action en revendication. D'autre part, la capacité du vendeur n'est pas garantie par l'acte sous seings privés.

S'agissant des biens mobiliers : par exemple un fonds de commerce, la cession peut se fait par un acte authentique sur support papier, reçu rédigé par un Notaire ou seings privés, toujours sur support papier, reçu par un professionnel juriste, le transfert du droit de propriété se fait donc grâce à cet acte enregistré et publié, qui devient l'acte de cession par lequel l'acquéreur, en cas de besoin, justifiera son droit de propriété. Quant aux objets d'art ou de valeur mobilière qui sont du mobilier également, il existe dans certains pays, par exemple en France, un certificat d'achat, délivré par un commissaire-priseur lors d'une vente aux enchères, qui l'enregistrer et le publier. Soit il s'agit simplement d'une facture, ou d'un ticket de caisse. Ce titre de propriété ou certificat d'achat indique le numéro du lot acheté, ses caractéristiques, ses références et son prix. L'acheteur ne prend aucun risque sur la nature des biens achetés, dont l'authenticité et l'état sont garantis par les mentions portées au catalogue de vente. Une action en nullité de la vente pour erreur sur la substance est ouverte à l'acheteur à compter de la découverte de l'erreur, dans un délai de cinq ans. Une action en responsabilité dirigée solidairement contre l'opérateur de ventes et l'expert peut également être engagée dans les cinq ans.

Les principaux problèmes liés aux titres de propriété immobiliers ou mobiliers existants sont leur support, leur sécurisation, leur conservation, leur coût la rapidité du transfert du droit de propriété que renferme ces titres. En effet, les titres de propriété actuels sont sous la forme d'un acte en papier relié sous forme d'un cahier. Certains propriétaires prudents déposent leurs titres de propriété dans des lieux sûrs comme par exemple dans un coffre fort à leur domicile ou dans leur banque. La plupart des propriétaires gardent leurs titres de propriété chez eux, dans un meuble et, cela n'est pas sans risque de vol, d'incendie ou autre problème de catastrophe naturelle. En effet, le risque inhérent aux actes notariés et sous seings privés sur support papier, porte sur le volume, voir l'épaisseur desdits actes, leur conservation dans le temps et l'espace, leur jaunissement, leur dégradation par le feu l'humidité, ou les intempéries, les insectes, microbes, virus, champignons et toute autre cause de dégradation du papier ainsi que de l'espace nécessaire pour la conservation.

De plus, dans certains pays, les moyens technologiques actuels facilitent la consultation du plan cadastral, dans certains pays, il existe des moyens technologiques comme des sites internet créés par les autorités administratives, pour consulter le cadastre d'une commune au sujet d'un bien ou d'un terrain. Malgré toutes ces avancées, le support papier est toujours le seul moyen le plus utilisé pour délivrer un titre de propriété.

Document FR2929032 décrit une méthode d'identification d'un dossier pharmaceutique d'un patient consistant à extraire des données figurant sur la carte d'assurance maladie d'un patient au moyen d'un logiciel enregistré dans un terminal informatique d'une officine pharmaceutique.

### EXPOSE DE L'INVENTION

L'invention vise à remédier aux inconvénients de l'état de la technique et notamment à proposer un système électronique de titre de propriété sécurisé de nouvelle génération, selon la revendication 1.

Selon un premier aspect de l'invention, la carte de titre de propriété est attribuée à une parcelle de terrain cadastrée ou non.

Conformément à une autre possibilité, la carte de titre de propriété est attribuée au propriétaire et contient l'exhaustivité de ses biens mobiliers et/ou immobiliers.

Avantageusement, la puce électronique de la carte de titre de propriété ainsi que la puce électronique de la carte professionnelle sont sécurisées par des moyens cryptographiques et un code confidentiel.

De préférence, la carte de titre de propriété muni de sa puce électronique au recto contient en outre des informations gravées, au recto et au verso, lesdites informations étant, sur le recto, entre autres, un nom d'un pays de délivrance de la carte, son drapeau, le nom de la carte, 'TIMMOP', un numéro d'ordre, un nom et prénom du propriétaire, une signature du propriétaire, une photo dudit propriétaire, et sur le verso, entre autres, un nom de la commune où est situé le bien, une référence de parcelle, une adresse de la parcelle, une date de délivrance de la carte de titre de propriété, une date d'acquisition du bien, un nom du professionnel qui a reçu l'acte d'acquisition, une autorité ayant délivré la carte de titre de propriété, une signature de ladite autorité.

Plus précisément, les informations contenues dans la puce électronique sécurisée de la carte de titre de propriété comprennent des actes notariés. En outre, lesdites informations pour un bien immobilier comprennent : un levé topographique de la parcelle de terrain, un plan de masse d'une zone, un plan de la commune, différents actes de transfert de propriété, des risques naturels de la zone, des documents d'urbanisme, un état hypothécaire, des rapports de diagnostics immobiliers, ainsi que toutes autres informations concernant ledit bien immobilier.

Par ailleurs, lesdites informations pour un bien mobilier ou un fonds de commerce comprennent: un certificat d'achat, une référence dans un catalogue de vente, des coordonnées d'un commissaire-priseur ou d'un huissier, un acte de cession pour un fonds de commerce, ainsi que toutes autres informations concernant ledit bien mobilier ou fonds de commerce.

De plus, la puce électronique sécurisée de la carte professionnelle contient les informations concernant l'identité du professionnel, des droits d'accès, pouvant différer, pour chacune des informations de la carte de titre de propriété, ainsi que toute autre information concernant ledit professionnel.

En outre, la carte professionnelle contient des informations gravées, au recto, lesdites informations étant un numéro de carte, un nom de carte, un nom et un prénom du professionnel, une date de validité de ladite carte professionnelle.

De préférence, la carte de titre de propriété et la carte professionnelle sont d'une taille standard d'environ 5 cm par 8 cm et dont la matière est en aluminium, en plastique, ou en toute autre matière au choix du pays.

Avantageusement, l'accès aux informations est lisible à l'aide du lecteur de carte comprenant une première entrée pour l'introduction de la carte professionnelle, nominative, et protégée par un code d'accès, et une deuxième entrée dans laquelle est introduite la carte de titre de propriété de telle sorte que le propriétaire au moyen de sa carte peut seulement visualiser le contenu de sa carte de titre de propriété et le professionnel, au moyen de sa carte professionnelle, en présence du propriétaire et de sa carte de titre de propriété, ait la possibilité soit, seulement visualiser le contenu de la carte de titre de propriété, soit, visualiser et modifier le contenu de ladite carte de titre de propriété en ajoutant ou supprimant des informations ou des actes.

L'invention concerne encore le procédé, selon la revendication 12, mis en oeuvre dans le système électronique de titre de propriété ci-dessus pour créer une carte de titre de propriété par un professionnel, un rédacteur d'un acte, ledit procédé comprend, postérieurement à la signature de l'acte d'acquisition et au paiement d'un prix pour ladite acquisition, les étapes suivantes :
- enregistrer des formalités auprès du service des Domaines ;
- délivrer une carte de titre de propriété à partir d'une base de données centrale ;
- attribuer ladite carte de titre de propriété à un propriétaire d'un bien mobilier ou immobilier;
- intégrer toutes les informations incluses dans des actes notariés de transfert de propriété, de donation, de vente, d'échange, de succession, de prescription acquisitive, etc. du bien sur ladite carte de titre de propriété, de telle sorte que cette carte de titre de propriété, 'TIMMOP', soit un acte de propriété, un acte de donation, un acte de succession, d'échange, etc ;
- graver les informations concernant le propriétaire, un pays, et autres sur le recto et le verso de la carte de titre de propriété ; et
- envoyer la carte de titre de propriété au propriétaire avec un code d'accès permettant audit propriétaire de lire les informations incluses dans ladite carte de titre de propriété au moyen d'un lecteur de carte.

En outre, le procédé, selon la revendication 13, mis en oeuvre dans le système électronique de titre de propriété ci-dessus pour modifier le contenu d'une carte de titre de propriété existante, par le professionnel, le rédacteur de l'acte, comprend les étapes suivantes :
- demander une formalité auprès des services de Domaine pour une carte de titre de propriété;
- modifier ou supprimer un acte notarié existant sur la carte de titre de propriété ;
- ajouter un nouvel acte sur ladite carte de titre de propriété en présence du propriétaire du bien mobilier ou immobilier.

L'invention concerne encore un logiciel applicatif selon la revendication 14 permettant la création et la modification d'une carte de titre de propriété par une autorité de délivrance comprenant des modules d'intégration, de gestions et de traitements des informations contenues dans ladite carte de propriété par un professionnel, au moyen d'une carte professionnelle, ledit logiciel comprend en outre un module sécurisé permettant d'accéder auxdites informations par l'intermédiaire d'un lecteur de carte.

En outre, l'invention concerne l'utilisation de la carte de titre de propriété selon la revendication 15.

### BREVE DESCRIPTION DES FIGURES

D'autres caractéristiques, détails et avantages de l'invention ressortiront à la lecture de la description qui suit, en référence aux figures annexées, qui illustrent :
- la figure 1 montre le recto de la carte de titre de propriété, nationale ou internationale, de nouvelle génération d'un bien mobilier et/ou immobilier conforme à l'invention;
- la figure 2 montre le verso de la carte de titre de propriété, nationale ou internationale, de nouvelle génération d'un bien mobilier et/ou immobilier conforme à l'invention;
- la figure 3 montre la carte professionnelle, conforme à l'invention ;
- la figure 4 montre le lecteur de carte dédié selon l'invention ;
Pour plus de clarté, les éléments identiques ou similaires sont repérés par des signes de référence identiques sur l'ensemble des figures.

### DESCRIPTION DETAILLEE

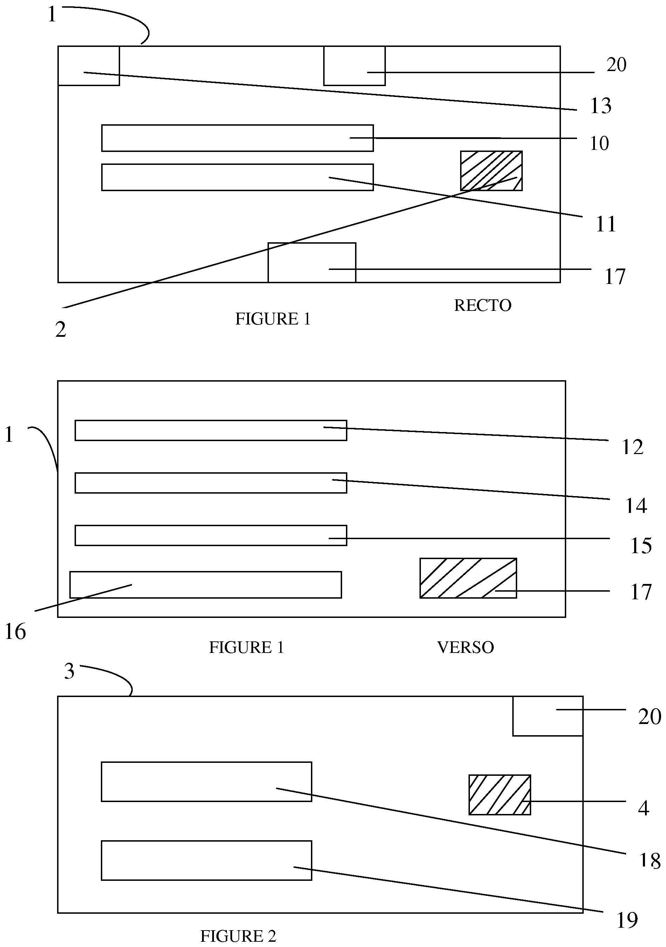

La figure 1 montre une carte 1 de titre de propriété nouvelle génération selon la présente invention. Cette carte 1 de titre de propriété, nommée TIMMOP, comprend une puce électronique 2, ladite puce 2 est placé sur le recto de la carte 1 de titre de propriété et contient toutes les informations concernant au moins un bien immobilier et/ou mobilier. Cette puce 2 est sécurisée par des moyens cryptographiques et un code confidentiel. La puce 2 contient un microprocesseur, capable de traiter lesdites informations, et de la mémoire afin de stocker lesdites informations. Les informations contenues sur la puce 2 comprennent l'exhaustivité des informations qui se trouveraient dans des actes notariés. Ladite puce peut ainsi comprendre une photo 13 du ou des propriétaires d'un bien ou dans le cas d'une copropriété, la photo d'un des copropriétaires représentant la copropriété. Ladite puce 2 contient aussi le levé topographique de la parcelle de terrain, le plan de masse d'une zone, le voisinage, les différents actes de cessions et de transfert de propriété, les risques naturels de la zone, des documents urbanisme, un état hypothécaire, des rapports de diagnostics immobiliers, et de manière générale, toutes les informations d'un titre de propriété, ainsi que les annexes liées, selon la législation et la politique de chaque pays en matière de biens immobiliers.

Selon un mode de réalisation de l'invention, la carte TIMMOP est attribuée à une parcelle de terrain. Lorsque cette parcelle de terrain trouve un propriétaire, après la signature de l'acte d'achat et le paiement du prix par le ou les acheteurs selon l'accord avec le vendeur, un professionnel, un notaire, demande au service des Domaines d'enregistrer cet acte sur la carte de titre de propriété 'TIMMOP'. Une fois l'enregistrement des formalités achevé par le service des Domaines, le professionnel, appartenant audit service des Domaines, crée la formalité sur la carte TIMMOP. Une fois la formalité est enregistrée sur la carte, le professionnel rédacteur, notaire, crée l'acte notarié et l'enregistre sur la puce 2 de la carte de titre de propriété 'TIMMOP'. Le professionnel rédacteur intégrera sur la puce 2 de la carte 1 de titre de propriété 'TIMMOP' toutes les informations concernant le bien acheté. Lesdites informations sont de toutes natures, une photo du ou des propriétaires, un levé topographique de la parcelle de terrain, un plan de masse, les différents actes de cession, les risques naturels d'une zone, les documents d'urbanisme, un état hypothécaire, les rapports de diagnostics immobiliers, ainsi que toute autre information concernant le bien.

Par ailleurs, la carte 1 de titre de propriété, TIMMOP, sera gravée au recto (figure 1) et au verso (figure 2) avec des informations comme, par exemple, sur le recto de la carte, le nom d'un pays de délivrance de la carte 1, TIMMOP, son drapeau, le nom de la carte 'TIMMOP' 20,un numéro d'ordre, un nom et un prénom du ou des propriétaires 10, une signature 17 du propriétaire et une photo 13 du ou des propriétaires. De la même manière, d'autres informations sont gravées sur le verso de la carte (figure 2), comme un nom d'une commune 12 où est situé le bien, une référence de parcelle, une adresse de la parcelle, une date de délivrance 15 de la carte 1 de titre de propriété, 'TIMMOP', une date d'acquisition 16 dudit bien, un nom du professionnel qui a reçu l'acte d'acquisition, une autorité ayant délivré ladite carte 1 de titre de propriété , une signature de ladite autorité, etc...

Lorsqu'il s'agit d'un mobilier ou un fonds de commerce, la puce électronique 2 de la carte 1, 'TIMMOP' comprend des informations suivantes : un certificat d'achat, une référence dans un catalogue de vente, des coordonnées d'un commissaire-priseur ou d'un huissier, un acte de cession pour un fonds de commerce, ainsi que toutes autres informations concernant ledit bien mobilier ou le fonds de commerce.

Lorsque, la carte 1, 'TIMMOP', servira comme un titre de propriété référencé par une parcelle de terrain et dans le cas où un propriétaire possède plusieurs terrains ou biens immobiliers, ledit propriétaire aura autant de carte TIMMOP que de titres de propriétés. De plus, lorsque le propriétaire vend une parcelle de terrain ou un bien, la carte1 'TIMMOP' correspondante à ladite parcelle de terrine ou ledit bien immobilier sera transféré au nouveau propriétaire. Dans ce cas, le professionnel, notaire, avant de transférer la carte 'TIMMOP' au nouveau propriétaire, modifiera les informations contenue dans la puce électronique 2. De même, les informations concernant l'identité du propriétaire seront remplacées par celles concernant l'identité du nouveau propriétaire.

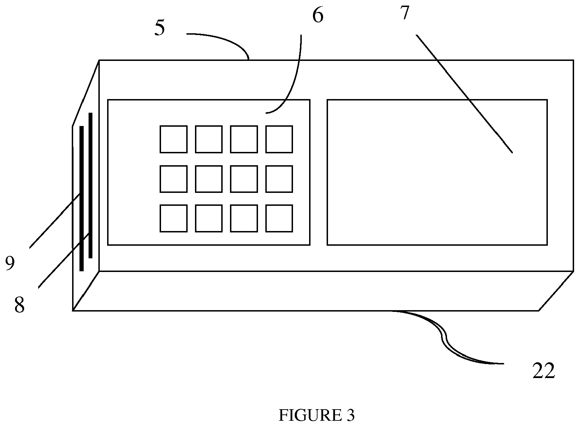

Le dispositif comprend, en outre, une autre carte, nommée carte professionnelle. La figure 3 montre cette carte professionnelle 3, et, on voit que la carte comprend une puce électronique 4 sécurisée par des moyens cryptographiques et un code confidentiel. Cette carte professionnelle contient des informations concernant l'identité d'un professionnel, des droits d'accès aux différentes informations de la carte 1 de titre de propriété, 'TIMMOP', en présence du propriétaire du bien et de sa carte 1 de titre de propriété, et toute autre information concernant ledit professionnel. Sur cette carte sont gravées des informations suivantes : le numéro de la carte, le nom et le(s) prénom(s) du professionnel ainsi qu'une date de validité de la carte.

En outre, la carte TIMMOP, 1, et la carte professionnelle, 3, sont d'une taille standard, soit d'environ 5 cm par 8 cm. La matière desdites cartes peut être en plastique, ou en aluminium, ou en toute autre matière selon le choix de chaque pays. En effet, chaque pays qui adoptera ce dispositif de titre de propriété pourra choisir la matière de la carte et la personnaliser, par exemple, par l'ajout d'un symbole représentant le pays. L'avantage de réaliser une carte en aluminium ou en un autre métal est, outre le fait que l'aluminium soit léger, la capacité de résistance à un incendie, un choc, ou à une quelconque catastrophe naturelle.

Ce dispositif de titre de propriété électronique de nouvelle génération peut être adapté dans n'importe quel pays dans lesquels l'acte effectué sur un bien mobilier et/ou immobilier est un acte notarié ou sous seing privé.

Afin d'accéder aux informations, le dispositif selon la présente invention comprend un lecteur de carte 5 dédié. La figure 4 montre ce lecteur de carte 5, ledit lecteur de carte 5 comprend une première entrée, 9, pour l'introduction de la carte professionnelle 3, nominative, et protégée par un code d'accès, et, une deuxième entrée, 8, dans laquelle est introduite la carte 1 de titre de propriété, 'TIMMOP'. Par ailleurs, le lecteur de carte possède un clavier 6 pouvant être tactile ou mécanique, afin de saisir un code confidentiel, ainsi qu'un afficheur LCD 7, permettant d'accompagner l'utilisateur dans les opérations d'identification des cartes. L'accès aux informations de la carte 1, 'TIMMOP' n'est possible qu'à l'aide de ce lecteur de carte 5 dédié. Le propriétaire d'un bien mobilier et/ou immobilier ne peut pas modifier un acte ou ajouter des informations sur sa carte 1, 'TIMMOP'. Seul le professionnel rédacteur peut modifier un acte de propriété et, seulement en présence du ou des propriétaires dudit bien, ou de son représentant. En effet, la modification ne peut être effectuée que par l'introduction simultanée dans ledit lecteur des deux cartes: la carte 1, 'TIMMOP', et la carte professionnelle 3. Or, celles-ci étant sécurisées, notamment de par l'introduction d'un code confidentiel, la présence des deux intervenants est nécessaire pour toute modification des données de la carte 1, 'TIMMOP'. Par ailleurs, afin d'empêcher tout acte de malveillance d'un tierce non propriétaire de la carte 1, la saisie répétée d'un code confidentiel erroné bloque la carte.

Selon un autre mode de réalisation préférée de l'invention, la carte 1, de titre de propriété, TIMMOP' sera attribuée à un propriétaire. Dans ce cas, une unique carte 1 'TIMMOP' peut contenir plusieurs titres de propriétés. En effet, lorsqu'un propriétaire a déjà une carte1, 'TIMMOP' à sa disposition, et souhaite acheter un autre bien, une parcelle de terrain, une maison, un appartement, un fond de commerce, etc, ..., il pourra ajouter sur sa carte TIMMOP ce nouvel acte de propriété. Pour cela, le rédacteur de l'acte, après la demande des formalités au service des Domaines et l'enregistrement desdites formalités, peut, en présence du propriétaire, ajouter un nouvel acte à la carte 'TIMMOP' du propriétaire. En effet, pour des raisons de sécurité, le professionnel rédacteur ne pourra pas modifier ou ajouter un nouvel acte à la carte TIMMOP sans la présence du véritable propriétaire ou de son représentant. Ainsi, pour le rédacteur professionnel de l'acte, le droit de modification, ou d'ajout, n'est possible que par l'introduction couplée de sa carte professionnelle 3 et de la carte 1 TIMMOP du propriétaire, les deux cartes étant protégées par un code d'accès confidentiel. C'est pourquoi, les services des Domaines ne peuvent intervenir sur la carte 1 que pour ce qui concerne leurs formalités, mais, ils ne pourront pas modifier un acte réalisé par un professionnel rédacteur (Notaire). De même, un professionnel rédacteur, Notaire, ne pourra modifier les formalités effectuées par les Domaines. Quant au propriétaire de la carte 1, il ne pourra que lire les informations à l'aide de son lecteur de carte 5, sans aucun droit de modification du contenu de la carte 1, 'TIMMOP'.

L'avantage de l'attribution de la carte 1, de titre de propriété, 'TIMMOP' à un propriétaire, plutôt qu'à une parcelle, est qu'une seule carte TIMMOP peut ainsi contenir tous les actes notariés de tous les biens appartenant à un propriétaire ou à une famille de propriétaire. Un propriétaire possédant plusieurs biens peut se contenter d'une seule carte, légère, qu'il peut transporter avec lui. De plus, il arrive que dans certain pays d'Afrique, par exemple, une seule personne peut avoir 20 parcelles donc 20 titres de propriété, or, avec le dispositif selon la présente invention, une seule carte 1, 'TIMMOP' contiendra l'exhaustivité des ses biens. La capacité de la carte importe donc beaucoup, celle-ci doit donc être d'une capacité mémoire importante afin de pouvoir stocker toutes les informations concernant tous les biens d'un propriétaire. - la carte (TIMMOP) du propriétaire qui est véritablement son titre de propriété, titre dans lequel sont gravées, les informations concernant le propriétaire du bien immobilier ou mobilier, le bien immobilier ou mobilier lui-même, la situation du bien, l'origine de propriété du bien, ses caractéristiques, et toutes les clauses juridiques de protection des parties et du bien, ainsi que les annexes (les formalités requises et effectuées avec leurs mentions, les plans etc... en sommes tout le contenu d'un acte authentique).

L'accès à cette carte du propriétaire, est réservé uniquement au propriétaire du bien, à l'aide d'un code confidentiel, étant entendu que le propriétaire ne peut modifier l'acte qui y est contenu, ni les formalités. Il ne peut que les consulter à l'aide d'un boîtier électronique en sa possession, nous y reviendrons plus loin, ou les copier comme les actes notariés sur support papier d'aujourd'hui.

Un bien immobilier au sens de l'invention est considéré comme un terrain bâti ou non, une maison, un immeuble constitué de plusieurs appartement, un hôtel, un bureau, un fond de commerce et des biens patrimoniaux.

Un fond de commerce est un bien patrimonial et se compose d'une manière générale, d'éléments incorporels (clientèle, droit au bail, nom commercial, enseignes, brevets, marque de fabrique, etc..) et corporels (matériel nécessaire à l'exploitation du fonds de commerce, le mobilier commercial, les aménagements et les agencements destinés à l'usage du fonds de commerce).

Par ailleurs, dans le cas où la carte est attribuée à un propriétaire, les informations sur la puce électronique 2 de la carte 1 'TIMMOP' contiennent toutes les informations constituant un fonds de commerce. Ainsi, les éléments nécessaires à un fonds commerce peuvent être annexés à un acte de cession de fond de commerce et ajoutés sur la puce de la carte TIMMOP.

La puce électronique 2, de la carte 1, 'TIMMOP',, contient le code confidentiel, pour la sécurisation, ainsi qu'un système de gestion des droits d'accès pour le propriétaire, pour les professionnels rédacteurs d'un acte, et pour les professionnels appartenant aux organismes d'états, par exemple, le service des Domaines, les professionnels travaillant dans le service de cadastre des mairies, qui ont pour rôle de donner l'autorisation de permis de construire pour un terrain, les géomètres expert, et, pour toute autre formalité qui a besoin d'un permis et/ou d'une autorisation particulière. Les professionnels rédacteurs sont des personnes agrées, notaires, qui ont pour rôle de préparer, de rédiger, d'attester, d'enregistrer et de conserver des documents, ou actes notariés, qui ont une valeur légale dans des contrats de droit civil.

Chaque professionnel est muni d'une carte professionnelle 3, contenant une puce électronique 4, sécurisée via un code d'accès, et contenant l'identifiant du professionnel ainsi que ses droits en lecture, écriture, ou modification pour un acte préalablement enregistré ou l'ajout d'une formalité, etc... Lesdites cartes professionnelles 3 sont délivrées selon le profil de chaque professionnel. Les profils sont déjà programmés dans des applications spécialisées conçues et mises en place à cet effet. Seul un professionnel agréé, un notaire ou le service des domaines, et possédant une carte professionnelle 3 peut ajouter, pour ce qui le concerne, un acte ou une formalité sur la carte 1, de titre de propriété, 'TIMMOP'.

la carte (TIMMOP) du professionnel, sur laquelle sont gravées les informations concernant le professionnel, et renfermant tous les actes qu'il reçoit dans son cabinet. L'accès est strictement réservé au professionnel par un code confidentiel, propre à chaque professionnel, et chaque acte est protégé par le code d'accès du dossier à l'Etude. Le professionnel à l'aide de sa carte a, accès à tous les actes reçus par lui au sujet d'un client. Pour avoir accès à l'acte reçu par un autre professionnel, il faut la présence simultanée du propriétaire et du professionnel. Le propriétaire devra introduire sa carte et son code confidentiel de même, le professionnel devra introduire aussi sa carte et son code ceci un gage de sécurité supplémentaire.

La carte (TIMMOP) de l'Administration des Domaines chargée des formalités. Cette carte bénéficie également d'un code confidentiel. Pour effectuer ses formalités, l'administration des Domaines aura accès aux actes rédigés par le professionnel grâce à son code personnel et au code caractérisant ou désignant chaque professionnel ainsi que le propriétaire concerné sans jamais pouvoir modifier l'acte du professionnel ou du cabinet. En cas d'erreur, ou d'omission, l'Administration ne pourra que modifier que ses propres formalités, de même le Notaire ou le professionnel pourra lire les formalités de l'Administration sans pouvoir les modifier.

La carte 1 de titre de propriété, 'TIMMOP' ainsi que la carte professionnelle 3, sont des cartes dites carte à contact, c'est-à-dire que la lecture des puces électroniques desdites cartes nécessitent un contact physique électrique. Ainsi, la lecture des informations contenues dans lesdites cartes à puces est réalisée par un lecteur de carte 5 dédié (figure 4). La figure 4 montre que le lecteur de carte 5 comprend deux entrées pour l'introduction d'une carte à puce. La première entrée, 8, est conçue pour introduire la carte 1, 'TIMMOP' et la seconde entrée, 9, est prévue pour l'introduction de la carte professionnelle 3. Le lecteur de carte 5 comprend une puce électronique programmé afin d'identifier les cartes 1 et 3 et ainsi permettre aux détenteurs audites cartes d'effectuer les opérations qu'ils désirent, selon leur droits et leurs profils la puce électronique non visible.

Le lecteur de carte 5 est munis d'un clavier alphanumérique et d'un afficheur LCD. Il dispose de batterie rechargeable ou parfois une simple pile peut lui donner une certaine autonomie. Par ailleurs, le lecteur peut être rechargé par une plaque utilisant l'énergie solaire. Le lecteur 5 peut être raccordable à un système informatique via une prise USB 22 afin de faciliter la lecture et écriture des données. La prise USB peut être liée au lecteur de carte 5 et il est placé dans un emplacement dédié afin de ne pas dépasser et que le transport du lecteur soit ainsi facilité.

L'invention concerne encore le procédé de mise en oeuvre dans le dispositif électronique de titre de propriété. Ledit procédé comprend les étapes de création de la carte 1 de titre de propriété par un professionnel, le rédacteur de l'acte ou bien le notaire dans certain pays comme par exemple en France. Ensuite, le professionnel demande l'enregistrement des formalités auprès du service des Domaines. La carte de titre de propriété est délivrée à partir d'une base de données centrale comprenant tous les informations concernant l'emplacement du bien, la référence cadastrale, etc.... ladite carte 1 est attribuée au propriétaire. Par la suite, le professionnel, le notaire, intègre toutes les informations comprises dans les actes notariés de transfert de propriété, donation, vente, échange, succession, prescription acquisitive, etc. du bien sur ladite carte de titre de propriété. Cette carte 1 ainsi délivré et comprenant les informations notariés est telle qu'un titre de propriété, ou un acte de donation ou un acte de succession, d'échange,etc. Cette carte 1 est nommée TIMMOP. L'étape suivante consiste à graver les informations concernant le propriétaire, le pays de délivrance de la carte, une photo du propriétaire, la référence du bien, etc... sur le recto et le verso de la carte. Ensuite, la carte 1 est envoyée au propriétaire avec un code d'accès lui permettant de lire les informations incluses dans cette carte de titre de propriété au moyen d'un lecteur de carte.

Le procédé comprend en outre, une étape de modification du contenu de la carte de titre de propriété par le professionnel, le rédacteur de l'acte, en cas de modification à apporter à un acte notarié, ou bien en cas de vente ou achat d'autres biens. Cette étape consiste à demander une formalité auprès des services de Domaine pour la carte de titre de propriété, à modifier un acte notarié existant sur la carte de titre de propriété ou bien à ajouter un nouvel acte sur ladite carte de titre de propriété, en présence du propriétaire du bien mobilier ou immobilier.

### UTILISATION DE LA CARTE

Le propriétaire de la carte 1 de titre de propriété introduit sa carte dans la fente 8 du lecteur, réservée à cet effet. Un code d'accès lui est demandé par le lecteur de carte 5, le propriétaire saisit son code confidentiel sur le pavé alphanumérique 6, tactile ou mécanique, du lecteur de carte 5. Ledit lecteur de carte identifie la carte 1 de titre de propriété, et, lorsque la vérification d'identification est réussie, un menu est proposé au propriétaire. Le lecteur de carte ne propose que des opérations de consultation de la carte de titre de propriété selon les droits pour le propriétaire définie par le logiciel applicatif. Ainsi, le propriétaire ne peut pas modifier l'acte ou ajouter d'autres documents. La lecture se fait sur un ordinateur connecté au lecteur de carte par l'intermédiaire de la prise usb du lecteur de carte. Ledit ordinateur peut être connecté à une imprimante, et permet ainsi au propriétaire d'imprimer un certificat de justification de propriété, ou toute autre pièce se trouvant sur la carte de titre de propriété, pour faire valoir ce que de droit auprès des organismes d'état.

Pour la modification ou le rajout d'un acte ou d'une nouvelle formalité sur la carte 1 de titre de propriété, le professionnel rédacteur d'acte doit introduire sa carte professionnelle 3, dans la deuxième entrée, 9, du lecteur de carte 5. Un code d'accès lui est demandé par le lecteur de carte, via l'écran LCD 7, le professionnel saisit alors son code confidentiel sur le pavé alphanumérique 6 du lecteur de carte. Ledit lecteur de carte 5 identifie la carte professionnelle 3, et, lorsque la vérification d'identification est réussie, un menu est proposé au professionnel rédacteur. Le professionnel, selon son profil, pourra lire ou modifier les actes et les formalités qu'il a reçus ou réalisés, ajouter de nouvelles formalités ou actes. Chaque acte ou formalité possède une identification, permettant d'en connaître le rédacteur ainsi que la date de rédaction. Ainsi, cela permet de limiter l'accès en modification audit acte à son rédacteur initial. Par ailleurs, pour des raisons de traçabilité, de fiabilité des informations et de sécurité, tout ajout ou modification d'un quelconque acte ou formalité présent sur la carte de titre de propriété sera historié et ne pourra être effacé.

Comme vu précédemment, l'ajout d'un acte ou d'une formalité ne peut être effectué qu'en présence des deux cartes, à savoir, la carte professionnelle 3, et la carte 1 de titre de propriété. Les deux cartes possèdent un code confidentiel permettant au lecteur 5 de les identifier. Par ailleurs, lors de la création de l'acte, ou de la formalité, dans la carte de titre de propriété, un identifiant est généré. Cet identifiant est un code réalisé à partir de l'identifiant du bien, l'identifiant du professionnel et la date et heure d'enregistrement de l'acte. Cet identifiant est unique et constitue un code d'authentification pour chaque acte. Cela permet, non seulement d'apporter une preuve de la réalisation de l'acte, mais aussi de gérer un accès ultérieur en modification et de le limiter au professionnel rédacteur dudit acte.

**Quant** aux services des domaines, ils devront également procéder par introduction de leur carte professionnelle 3 et l'entrée de leur code confidentiel pour avoir accès aux données des clients. Mais, ils ne peuvent modifier ou ajouter une formalité qu'après le travail exécuté par le professionnel rédacteur d'acte. En effet, lors de la création de l'acte par le rédacteur professionnel, un code unique est généré. Ainsi, le professionnel des Domaines, de par son profil, aura accès à un menu lui permettant de valider ledit acte et de générer un second code dit de formalité, ce code correspondant à l'enregistrement de l'acte dans la base de donnée du Domaine. Sans la création de ce nouveau code, aucun nouvel acte ou formalité ne pourra se faire par les Domaines. Les Domaines peuvent ajouter une nouvelle formalité, toujours dans le cadre des anciennes formalités, et ne pourrons pas modifier les actes effectués par d'autres, en l'occurrence les professionnels rédacteur. En d'autres termes, la rédaction de l'un permet à l'autre une intervention ponctuelle, adaptée et sécurisée de l'autre.

L'invention concerne encore le logiciel applicatif permettant la création de la carte 1 par une autorité de délivrance. Ledit logiciel comprend des modules d'intégration, gestions et traitements des informations contenues dans la carte 1. Les traitements sur la carte 1 sont effectués par un professionnel, au moyen de sa carte professionnelle 3, ledit logiciel comprend en outre un module sécurisé permettant d'accéder aux informations par intermédiaire d'un lecteur de carte 5.

De plus, la carte 1 ainsi crée est utilisée comme un titre universel de propriété et pourra être présenté comme preuve de propriété et ainsi faciliter les transactions.

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

## Revendications

1. Système électronique de titre de propriété de nouvelle génération comprenant
- une carte (1) de titre de propriété, sur laquelle des informations concernant au moins un propriétaire (10) et au moins un bien immobilier et/ou mobilier (11) sont gravées,
- une carte professionnelle (3), sur laquelle des informations concernant un professionnel (12) sont gravées,
la carte (1) de titre de propriété comprend une puce électronique (2) sécurisée destinée à contenir des informations confidentielles dudit propriétaire et dudit bien immobilier et/ou mobilier et des droits d'accès auxdites informations,
la carte professionnelle (3) comprend une puce électronique (4) sécurisée destinée à contenir des informations dudit professionnel et des droits d'accès dudit professionnel,
le système électronique comprenant en outre un lecteur de carte dédié,
le système électronique étant **caractérisé en ce que** le professionnel (12) accède aux informations de la carte (1) d'un propriétaire (10) en lecture seule ou en lecture et écriture avec l'introduction simultanée de la carte (1) et la validation de son code par le propriétaire et de la carte professionnelle (3) au moyen du lecteur de carte (5) dédié permettant d'accéder aux informations contenues dans la carte (1) de titre de propriété et aux informations contenues dans la carte professionnelle (3) ; et **en ce que** le propriétaire (10) accède aux informations de la carte (1) en lecture seulement avec son code d'accès via ledit lecteur de carte (5).

2. Système électronique de titre de propriété selon la revendication 1 pour lequel la carte (1) de titre de propriété est attribué à une parcelle de terrain cadastrée ou non.

3. Système électronique de titre de propriété selon la revendication 1 pour lequel la carte (1) de titre de propriété est attribué au propriétaire et contient l'exhaustivité de ses biens immobiliers et/ou mobiliers.

4. Système électronique de titre de propriété selon la revendication 1 dans lequel la puce électronique (2) de la carte (1) de titre de propriété ainsi que la puce électronique (4) de la carte professionnelle (3) sont sécurisées par des moyens cryptographiques et un code confidentiel.

5. Système électronique de titre de propriété selon l'une des revendications précédentes dans lequel la carte (1) de titre de propriété muni de la puce électronique (2) contient en outre des informations gravées, au recto et au verso, lesdites informations étant, sur le recto, entre autres, un nom d'un pays de délivrance, son drapeau, le nom de la carte (20) de titre de propriété, 'TIMMOP', un numéro d'ordre, un nom et un prénom du propriétaire, une signature du propriétaire (17), une photo du propriétaire (13), et sur le verso, entre autres, un nom de la commune (12) où est situé le bien, une référence de parcelle (14), une adresse de la parcelle, une date de délivrance (15) de la carte (1) de titre de propriété, une date d'acquisition du bien (16), un nom du professionnel qui a reçu l'acte d'acquisition, une autorité ayant délivré ladite carte (1) de titre de propriété, une signature de ladite autorité.

6. Système électronique de titre de propriété selon l'une des revendications précédentes dans lequel les informations contenues dans la puce électronique sécurisée (2) de la carte (1) de titre de propriété sont des actes notariés.

7. Système électronique de titre de propriété selon la revendication 6 dans lequel les informations pour un bien immobilier dans l'acte notarié sont : un levé topographique de la parcelle de terrain, un plan de masse d'une zone, un plan de la commune, différents actes de transfert de propriété, des risques naturels de la zone, des documents d'urbanisme, un état hypothécaire, des rapports de diagnostics immobiliers, ainsi que toutes autres informations concernant ledit bien immobilier.

8. Système électronique de titre de propriété selon la revendication 6 dans lequel les informations pour un bien mobilier ou un fonds de commerce comprennent dans l'acte notarié sont : un certificat d'achat, une référence dans un catalogue de vente, des coordonnées d'un commissaire-priseur ou d'un huissier, un acte de cession pour un fonds de commerce, toutes autres informations concernant ledit bien mobilier ou fonds de commerce.

9. Système électronique de titre de propriété selon l'une des revendications précédente dans lequel la puce électronique sécurisée (4) contient des informations concernant l'identité du professionnel, des droits d'accès, pouvant différer, pour chacune des informations de la carte (1) de titre de propriété, toute autre information concernant ledit professionnel, lesdites autres informations sont gravées au recto de la carte professionnelle (3) comprend un numéro de carte, un nom de carte 'TIMMOP' (20), un nom et un prénom du professionnel (18), une date (19) de validité de ladite carte professionnelle (3).

10. Système électronique de titre de propriété selon les revendications précédentes pour lequel la carte (1) de titre de propriété et la carte professionnelle (3) sont d'une taille standard d'environ 5 cm par 8 cm et dont la matière est en aluminium, en plastique, ou en toute autre matière au choix du pays.

11. Système électronique de titre de propriété selon l'une des revendications précédentes dont l'accès aux informations est possible à l'aide du lecteur de carte (5) comprenant une première entrée (9) pour l'introduction de la carte professionnelle (3), nominative, et protégée par un code d'accès, et une deuxième entrée (8) dans laquelle est introduite la carte (1) de titre de propriété de telle sorte que le propriétaire au moyen de sa carte (1) peut seulement lire le contenu de ladite carte (1) et le professionnel, au moyen de sa carte professionnelle (3), en présence du propriétaire et de sa carte (1) de titre de propriété, ait la possibilité soit, seulement visualiser le contenu de la carte (1) de titre de propriété, soit visualiser et modifier le contenu de ladite carte (1) de titre de propriété en ajoutant ou supprimant des informations ou des actes.

12. Procédé mis en oeuvre dans le système électronique de titre de propriété selon les revendications 1 à 11 pour créer une carte (1) de titre de propriété par un professionnel rédacteur ledit procédé comprend, postérieurement à la signature de l'acte d'acquisition et au paiement d'un prix pour ladite acquisition, les étapes suivantes :
- enregistrer des formalités auprès du service des Domaines ;
- délivrer une carte (1) de titre de propriété à partir d'une base de données centrale ;
- attribuer ladite carte (1) de titre de propriété à un propriétaire d'un bien mobilier ou immobilier;
- intégrer toutes les informations incluses dans des actes notariés de transfert de propriété, de donation, de vente, d'échange, de succession, de prescription acquisitive, etc. du bien sur ladite carte (1) de titre de propriété, de telle sorte que cette carte (1) de titre de propriété, 'TIMMOP' soit un acte de propriété, un acte de donation, un acte de succession, d'échange etc ;
- graver les informations concernant le propriétaire, un pays, et autres sur le recto et le verso de la carte (1) de titre de propriété ; et
- envoyer la carte (1) de titre de propriété au propriétaire avec un code d'accès permettant audit propriétaire de lire les informations incluses dans ladite carte (1) de titre de propriété au moyen d'un lecteur de carte (5).

13. Procédé mis en oeuvre dans le système électronique de titre de propriété selon l'une des revendications 1 à 11 **caractérisé en ce que** pour modifier le contenu d'une carte (1) de titre de propriété existant par le professionnel rédacteur de l'acte, le procédé comprend les étapes suivantes :
- demander une formalité auprès des services de Domaine pour une carte (1) de titre de propriété;
- modifier, supprimer un acte notarié existant sur la carte (1) de titre de propriété en présence du propriétaire ;
- ajouter un nouvel acte sur ladite carte (1) de titre de propriété en présence du propriétaire du bien mobilier ou immobilier.

14. Logiciel applicatif permettant la création , selon le procédé de la revendication 12, et la modification, selon le procédé de la revendication 13, d'une carte (1) de titre de propriété par une autorité de délivrance comprenant des modules d'intégration, gestions et traitements des informations contenues dans ladite carte (1) par un professionnel, au moyen d'une carte professionnelle (3), ledit logiciel comprend en outre un module sécurisé permettant d'accéder auxdites informations par intermédiaire d'un lecteur de carte (5),

15. Utilisation de la carte (1) de titre de propriété du système électronique selon l'une des revendications 1 à 11 en tant que titre universel de propriété.

## Patentansprüche

1. Ein elektronisches Eigentumstitelsystem der neuen Generation, das eine karte (1) umfasst, auf der Informationen über mindestens einen Eigentümer (10) und mindestens eine Immobilie und /oder Möbel (11) eingraviert sind eine Berufskarte (3) umfasst, auf der Informationen über einen Fachmann (12) eingraviert sind, wobei die Titelkarte (1) einen sicheren elektronischen Chip (2) enthält, der dazu bestimmt ist, vertrauliche Informationen über den Eigentümer und die Immobilie zu enthalten, und/oder Möbel und Zugriffsrechte auf die Informationen, wobei die Berufskarte (3) einen sicheren elektronischen Chip (4) enthält, der Informationen über sagte der Profi und Zugriffsrechte sagte der Profi enthalten soll, wobei das elektronische System ferner einen KarteLeser (5) dedizierte , wobei das elektronische System **dadurch gekennzeichnet ist, dass** der Profi (12) greift auf die Karteninformationen (1) eines Eigentümer (10), nur lesend oder lesend und schreibend bei gleichzeitiger Einführung der Karte (1) und der Validierung ihres Codes durch den Besitzer und die Berufskarte (3) mittels über den speziellen Kartenleser (5), der den Zugang zu den auf der Titelkarte (1) enthaltenen Informationen und zu den auf der Berufskarte (3) enthaltenen Informationen ermöglicht ; und dadurch, dass der Eigentümer (10) greift auf die Informationen der Karte (1) nur lesend mit seinem Zugangscode über den Kartenleser (5) gelesen werden.

2. Elektronisches Titelsystem nach Anspruch 1, bei dem die Kartentitelurkunde (1) einem Vermessung oder nicht Vermessung Grundstück zugeordnet ist.

3. Elektronisches Titelsystem nach Anspruch 1, bei dem die Kartentitelurkunde (1) dem Eigentümer zugeschrieben wird und die Vollständigkeit seiner Immobilien und/oder beweglichen Sachen enthält.

4. Elektronisches Titelsystem nach Anspruch 1, wobei der elektronische Chip (2) des Kartentitels (1) und der elektronische Chip (4) der Berufskarte (3) durch kryptografisch mittels gesichert sind und ein vertraulicher Code.

5. Elektronisches Titelsystem nach einem der vorhergehenden Ansprüche, wobei die mit dem elektronischen Chip (2) versehene Titelkarte (1) ferner eingravierte Informationen auf der Vorder- und Rückseite enthält, wobei diese Informationen vorliegen Auf der Vorderseite unter anderem der Name eines Ausstellungslandes, dessen Flagge, der Name der Kartentitelurkunde (20), "TIMMOP", eine Seriennummer, ein Name und ein Vorname des Eigentümer eine Unterschrift des Eigentümer (17), ein Foto des Eigentümer (13), und auf der Rückseite, unter anderem, Name der Gemeinde (12), in der sich die Immobilie befindet, eine Grundstückreferenz (14), eine Adresse das Grundstück , ein Ausstellungsdatum (15) der Eigentumsurkunde (1), ein Datum des Erwerbs des Eigentums (16), ein Name der Profi , der die Erwerbsurkunde erhalten hat, eine ausstellende Behörde die Titelkarte (1) eine Unterschrift der Behörde.

6. Elektronisches Titelsystem nach einem der vorhergehenden Ansprüche, wobei die im sicheren elektronischen Chip (2) der Karte (1) enthaltenen Informationen Titelurkunden notariell beglaubigte Urkunden sind.

7. Elektronisches Titelsystem nach Anspruch 6, wobei die Informationen für eine Immobilie im der notarielle Akt sind: eine topografische Vermessung des Grundstücks, ein Grundriss einer Zone, eine Plan der Gemeinde , verschiedene Eigentum sübertragung shandlungen, natürliche Risiken des Gebiets, Planungsunterlagen, eine Hypothekenabrechnung, Immobilien diagnoseberichte sowie sonstige Informationen in Bezug auf die Immobilie.

8. Elektronisches Titelsystem nach Anspruch 6, wobei die dass die in der notariellen Urkunde enthaltenen Informationen für ein bewegliches Vermögen oder einen Goodwill sind: eine Kaufbescheinigung, eine Referenz in einem Verkaufskatalog, Kontaktdaten "ein Auktionator oder Gerichtsvollzieher, ein Akt der Übertragung für ein Goodwill, alle anderen Informationen in Bezug auf das bewegliche Vermögen oder den Goodwill.

9. Elektronisches Titelsystem nach einem der vorhergehenden Ansprüche, bei dem der sichere elektronische Chip (4) Informationen über die Identität der Profi enthält, wobei die Zugriffsrechte für jede der Informationen auf der Karte (1) unterschiedlich sein können, sonstige Angaben zu des Profi, die andere Information, die auf der Vorderseite der Berufskarte (3) eingraviert ist, enthält eine Kartennummer, einen "TIMMOP" Kartennamen (20), einen Namen und einen Vornamen des Profi (18), ein Datum (19) der Gültigkeit der Berufskarte (3).

10. Elektronisches Titelsystem nach den vorhergehenden Ansprüchen, bei dem die Titelkarte (1) und die Berufskarte (3) eine Standardgröße von etwa 5 cm mal 8 cm haben und in deren Material sich befindet Aluminium, Kunststoff oder ein anderes Material Ihrer Wahl des Landes.

11. Elektronisches Titelsystem nach einem der vorhergehenden Ansprüche, dessen Zugriff auf Informationen über ist mit dem Kartenleser möglich (5) umfassend einer ersten Eingabe (9) zur Einführung der Berufskarte (3), nominativ und durch einen Zugangscode geschützt, und einen zweiten Eintrag (8), in den die Titelkarte (1) eingeführt wird, so dass der Profi nur mit Hilfe seiner Karte (1) kann lesen sie den inhalt der besagten karte (1) und der profi hat mittels seiner Berufskarte (3) in anwesenheit des besitzers und seiner titelkarte (1) die möglichkeit zu sein, nur den inhalt der zu visualisieren Titelkarte (1), oder visualisieren und modifizieren des Inhalts der Titelkarte (1) durch Hinzufügen oder Löschen von Informationen oder Urkunden.

12. Verfahren, das in dem elektronischen Titelsystem nach den Ansprüchen 1 bis 11 implementiert ist, um eine Titelkarte (1) durch einen Profi Redakteur zu erstellen, wobei das Verfahren umfasst nach der Unterzeichnung des Erwerbsakts und der Zahlung eines Preises für den Erwerb die folgenden Schritte:
- formalitäten bei der Abteilung für Domains registrieren;
- ausstelleneine TitleKarte (1) aus einer zentralen Datenbank ;
- zuzuweisen die Titelkarte (1) einem Eigentümer eines beweglichen oder unbeweglichen Vermögens ;
- ilntegration aller in notariellen Urkunden enthaltenen Informationen über Eigentumsübertragung, Spende, Verkauf, Umtausch, Nachfolge, Erwerbsverordnung usw. die Eigenschaft auf der TitleKarte (1), so dass diese TitleKarte (1), TIMMOP' ob eine Urkunde, ein Akt der Spende, ein Akt der Aufeinanderfolge, etc Austausch ;
- gravieren auf der Vorder- und Rückseite der Titelkarte (1) Angaben über den Eigentümer, ein Land und andere machen ; und
- senden die Titelkarte (1) mit einem Zugangscode an den Eigentümer, der es dem Eigentümer ermöglicht, die in der Titelkarte (1) enthaltenen Informationen mittels eines Kartenlesers (5) zu lesen.

13. Verfahren Im elektronischen Titelsystem implementiertes nach einem der Ansprüche 1 bis 11, **dadurch gekennzeichnet, dass** zum Ändern des Inhalts einer vorhandenen Titelkarte (1) durch den professionellen Redakteur der Handlung umfasst das Verfahren die folgenden Schritte:
- beantragen bei den Diensten von Domain eine Formalität für eine Eigentumsurkunde (1) ;
- veränderung, löschen eine auf der Karte (1) notarielle Urkunde in Anwesenheit des Eigentümers;
- hinzufügen in Anwesenheit des Inhabers der beweglichen oder unbeweglichen Sachen eine neue Urkunde auf der besagten Titelkarte (1);
- gravieren auf der Vorder- und Rückseite der Titelkarte (1) Angaben über den Eigentümer, ein Land und andere Personen machen.

14. Anwendungssoftware zum Erzeugen nach dem Verfahren von Anspruch 12 , und Modifizieren nach Anspruch 13 eine Titlekarte (1) durch eine ausstellende Behörde, die Integrationsmodule umfasst, Verwaltung und Verarbeitung von in der Karte (1) enthaltenen Informationen durch einen Profi mittels einer Berufskarte (3), wobei die Software ferner ein sicheres Modul zum Zugreifen auf die Informationen über einen Kartenleser aufweist (5) nach den Ansprüchen 12 bis 13.

15. Verwendung der Titelkarte (1) des elektronischen Systems nach einem der Ansprüche 1 bis 11 als allgemeiner Universaltitel.

## Claims

1. A new generation electronic property title system comprising a property title card (1), on which information concerning at least one owner (10) and at least one real estate and / or personal property (11) are engraved, a professional card (3), on which information concerning a professional (12) is engraved, the title card (1) includes a secure electronic chip (2) intended to contain confidential information of said owner and said real estate and / or personal property and access rights to said information, the professional card (3) includes a secure electronic chip (4) intended to contain information of said professional and access rights of said professional, the electronic system further comprising a reader card (5) dedicated, the electronic system being **characterized in that** the professional (12) accesses the information of the property title card (1) an owner (10) in reading only or in reading and writing with the simultaneous introduction of the card (1) and the validation of its code by the owner and the professional card (3) by means of the reader card (5) dedicated to access the information contained in the property title card (1) and the information contained in the professional card (3); and **in that** the owner (10) accesses the information of the card (1) in reading only with its access code via said card reader (5).

2. Electronic property title system according to claim 1 for which the property title card (1) title is assigned to a parcel of land registered or not.

3. Electronic property title system according to claim 1 for which the title card (1) is attributed to the owner and contains the completeness of his real estate and / or movable property.

4. Electronic property title system according to claim 1 wherein the electronic chip (2) of the title card (1) and the electronic chip (4) of the professional card (3) are secured by means cryptographic and a confidential code.

5. Electronic property title system according to one of the preceding claims wherein the property title card (1) provided with the electronic chip (2) further contains engraved information, the front and back, said information being , on the front, among others, a name of a country of issue, its flag, the name of the title card (20), 'TIMMOP', a serial number, a name and a first name of the owner , a signature of the owner (17), a photo of the owner (13), and on the back, among others, a name of the town (12) where the property is located, a parcel reference (14), an address of the parcel, a date of issue (15) of the property title card (1), a date of acquisition of the property (16), a name of the professional who has received the deed of acquisition, an issuing authority said title card (1), a signature of said authority.

6. Electronic property title system according to one of the preceding claims wherein the information contained in the secure electronic chip (2) of the property title card (1) are notarized acts.

7. Electronic property title system according to claim 6 wherein the information for a real estate in the notarial act are: a topographic survey of the parcel of land, a ground plan of a zone, a map of the municipality , various acts of transfer of ownership, natural risks of the area, planning documents, a mortgage statement, real estate diagnostic reports, as well as any other information concerning the said property.

8. Electronic property title system according to claim 6 wherein the information for a movable property or a goodwill include in the notarial act are: a certificate of purchase, a reference in a sales catalog, contact details 'an auctioneer or bailiff, an act of transfer for a business, all other information concerning the said movable property or goodwill.

9. Electronic property title system according to one of the preceding claims wherein the secure electronic chip (4) contains information concerning the identity of the professional, access rights, may differ, for each of the information on the property title card (1), any other information concerning the said professional, the said other information is engraved on the front of the professional card (3) includes a card number, a 'TIMMOP' card name (20), a name and a first name of the professional (18), a date (19) of validity of the professional card (3).

10. Electronic property title system according to the preceding claims for which the property title card (1) and the professional card (3) are of a standard size of about 5 cm by 8 cm and whose material is in aluminum, plastic, or any other material of your choice.

11. Electronic property title system according to one of the preceding claims whose access to information is possible by using the card reader (5) comprising a first input (9) for the introduction of the business card (3), nominative, and protected by an access code, and a second entry (8) in which the property title card (1) is introduced so that the owner by means of his card (1) can only read the contents of the said card (1) and the professional, by means of his professional card (3), in the presence of the owner and his property title card (1), have the possibility to be, either only to visualize the contents of the property title card (1), either to visualize and to modify the contents of said property title card (1) by adding or deleting information or acts.

12. Method implemented in the electronic property title system according to claims 1 to 11 to create a property title card (1) by a professional redactor said method comprises, after the signing the act of acquisition and the payment of a price for the said acquisition, the following steps:
- register formalities with the Department of Domains;
- issue a property title card (1) from a central database;
- assign said property title card (1) to an owner of movable or immovable property;
- integrate all information included in notarial acts of transfer of ownership, donation, sale, exchange, succession, acquisitive prescription, etc. property on said title card (1), so that this property title card (1), 'TIMMOP' is an act of property, a act of gift, an act of succession, exchange etc ;
- engrave information concerning the owner, a country, and others on the front and back of the property title card (1); and
- send the property title card (1) to the owner with an access code enabling said owner to read the information included in said property title card (1) by means of a card reader (5).

13. Method implemented in the electronic property title system according to one of claims 1 to 11 **characterized in that** for modifying the contents of an existing property title card (1) by the professional redactor of the act, the method comprises the following steps:
- to request a formality from the services of Domain for a property title card (1);
- modify, delete a notarial act existing on the property title carte (1) in the presence of the owner;
- add a new act on the said title card (1) in the presence of the owner of the movable or immovable property.

14. An application software for creating, according to the method of claim 12, and modifying, according to the method of claim 13, a property title card (1) by a issuing authority comprising integration modules. , management and processing of information contained in said card (1) by a professional, by means of a professional card (3), said software further comprises a secure module for accessing said information via a card reader (5) according to claims 12 to 13.

15. Use of the property title card (1) of the electronic system according to one of claims 1 to 11 as a universal title of ownership.
